# EUROPÄISCHE PATENTSCHRIFT

(11) **EP 2 767 387 B1**
(45) Veröffentlichungstag und Bekanntmachung des Hinweises auf die Patenterteilung: **02.12.2015**
(21) Anmeldenummer: 14000463.1
(22) Anmeldetag: 10.02.2014
(51) Int. Cl.: B29C 70/44, B29C 70/54

(54) **Vorrichtung zur Herstellung von Bauteilen aus Faserverbundwerkstoffen**
Device for the production of fibre reinforced composite parts
Dispositif de fabrication de composants à partir de matériaux en fibres composites

(30) Priorität: 15.02.2013 DE 102013002551
(43) Veröffentlichungstag der Anmeldung: 20.08.2014
(73) Patentinhaber: Faserverbund Innovations UG (haftungsbeschränkt), 49477 Ibbenbüren (DE)
(72) Erfinder: Dierkes, Dominik, 49477 Ibbenbüren (DE)
(74) Vertreter: Weeg, Thomas

(56) Entgegenhaltungen:
- WO-A1-2013/072074
- DE-A1-102011 051 236
- US-A1- 2002 020 934

## Beschreibung

Die vorliegende Erfindung bezieht sich auf eine Vorrichtung zur Herstellung von Bauteilen aus Faserverbundwerkstoffen mit einem Formwerkzeug, das eine luftdicht verschließbare Formkammer zur Aufnahme und Bildung eines Verbunds aus einem Fasermaterial und einem Matrixmaterial aufweist und in das ein Membranelement zur Trennung des Faser- und Matrixmaterials von einem Gasabsaugweg einlegbar ist, einem mit dem Formwerkzeug über den mit dem Gasabsaugweg verbundenen Absauganschluss zur Absaugung von einem in der Formkammer befindlichen Gas und einem Zulaufanschluss für ein aus einem Harzbehälter in die Formkammer einlaufendes Matrixmaterial.

Eine gattungsgemäße Vorrichtung ist beispielsweise aus der Schrift EP 1 181 149 bekannt. Dort ist eine Vorrichtung und ein Verfahren beschrieben, wie mit einer Sperrmembran durch Anlegen eines Vakuums an ein Formwerkzeug ein Matrixmaterial aus einem Harzbehälter in die Formkammer gesaugt werden kann, wobei sich das Materixmaterial durch die gasdurchlässige, aber für das Materixmaterial undurchlässige Membran an dieser entlang gleichmäßig in der Formkammer ausbreitet, dabei das Fasermaterial benetzt und durchtränkt, bis es den gesamten Hohlraum der Formkammer ausfüllt. Die Sperrmembran trennt das Matrixmaterial von den Gasabsaugwegen, so dass sich diese nicht mit dem Matrixmaterial zusetzen können und bis zur Beendigung des Befüllvorgangs der Formkammer mit dem Matrixmaterial verfügbar bleiben zur Absaugung des in der Formkammer befindlichen Gases. Bei einer flächigen Abdeckung der Formkammer mit der Membran kann das Vakuum über die gesamte Abdeckfläche wirken. Ist die Befüllung der Formkammer abgeschlossen, kann das Matrixmaterial aushärten. Nach ausreichender Aushärtung kann das fertige Bauteil aus der Formkammer entnommen werden.

Eine alternative gattungsgemäße Technik zur Trennung des Matrixmaterials von den Gasabsaugwegen in einer Vorrichtung zur Herstellung von Bauteilen aus Faserverbundmaterial ist in der Schrift DE 20 2010 001 836.6 offenbart. Dort ist als Membranelement eine schlauchartige Gasabsaugleitung, die im Innenraum des Tränkungswerkzeugs verlegt ist, mit einer gasdurchlässigen, aber matrixmaterialundurchlässigen Membran umhüllt, so dass sich das Matrixmaterial bei einem Anlegen eines Vakuums an die Gasabsaugleitung innerhalb der Formkammer ausbreiten kann, nicht aber in die Gasabsaugleitung eindringt. Die Formkammer kann mit der oder den mit dem Membran umhüllten Gasabsaugleitungen nicht flächig abgedeckt werden, das ist allerdings auch nicht erforderlich, da bei einer geeigneten Verlegung der Gasabsaugleitungen in der Formkammer oder im Randbereich der Formkammer eine vakuuminduzierte vollständige Füllung der Formkammer mit dem Matrixmaterial erzielbar ist.

US-A-2002 0020934 offenbart die Merkmale des Oberbegriffs des Anspruchs 1.

In beiden vorstehend genannten Vorrichtungen bildet die Formkammer ein Tränkungswerkzeug, in dem das in die Formkammer eingelegte Fasermaterial mit dem Matrixmaterial getränkt wird, damit daraus nach dem Aushärten des Matrixmaterials ein Faserverbundbauteil entsteht. Faserverbundbauteile zeichnen sich aus durch eine hohe Festigkeit und Belastbarkeit bei einem tendenziell niedrigen spezifischen Gewicht. Als Fasermaterial können beispielsweise Matten oder Gebilde aus einer Glasfaser oder Karbonfaser verwendet werden, aber auch andere Fasermaterialien können verwendet werden. Die Fasermaterialien können geflochten, gestrickt, gewirkt, gewoben oder auf sonstige Weise zu einem für Fertigungs- und Anwendungszwecke ausreichend festen Gebilde zusammengesetzt sein.

Ein Grund, der für den Einsatz von Faserverbundwerkstoffen spricht, ist ihre vergleichsweise hohe Festigkeit bei einem niedrigeren spezifischen Gewicht. Um das Gewicht möglichst gering zu halten, muss bei der Herstellung von Faserverbundbauteilen darauf geachtet werden, dass im Verhältnis zum eingesetzten Fasermaterial nicht zuviel Matrixmaterial in das Formwerkzeug einfließt. Außerdem ist der Faservolumengehalt entscheidend für die späteren mechanischen Eigenschaften des Bauteils. Bei einem fertigen Faserverbundbauteil wird ein bestimmter Faservolumengehalt als optimal angesehen. Je nach Bauteil und verwendeten Materialien wird häufig ein Faservolumengehalt von 55 - 60 % des Volumens des fertigen Bauteils als angemessen angesehen.

Der Zufluss des Matrixmaterials wird üblicherweise von einer Person kontrolliert und manuell geregelt, was allerdings personalintensiv und fehleranfällig ist und wobei das zusätzliche Problem entsteht, dass die Herstellung von Bauteilen in Serie zu Bauteilen mit einer vergleichsweise zu großen Gewichts- und Qualitätsstreuung führt, die für industrielle Anwendungen nicht akzeptabel ist.

Demgemäß ist es die Aufgabe der vorliegenden Erfindung, eine Vorrichtung zu schaffen, bei der der Zufluss des Matrixmaterials möglichst genau auf eine Menge begrenzt wird, bei der sich der gewünschte Faservolumengehalt einfach und sicher einstellt.

Die Aufgabe wird für eine gattungsgemäße Vorrichtung gelöst, indem an den Zulaufanschluss und/oder den Harzbehälter ein Sensor angeschlossen ist, mit dem der im Zulaufanschluss oder dem Harzbehälter herrschende aktuelle Druck messbar ist, der Sensor mit einer einem Schließelement zugeordneten Stelleinrichtung verbunden ist, das Schließelement bei einem Auslösesignal des Sensors von der Stelleinrichtung aus einer Offenstellung in eine Schließstellung beweglich ist und das Schließelement den Zulaufanschluss und/oder den Harzbehälter sperrt.

Dem druckabhängig geregelten Verschluss des Zulaufanschlusses liegt die Erkenntnis zu Grunde, dass bestimmte Druckwerte im Zulaufanschluss oder dem Harzbehälter während des Zulaufs des Matrixmaterials in die Formkammer einen bestimmten Faservolumengehalt des herzustellenden Faserverbundbauteils indizieren, wobei die Druckwerte hier immer einen Unterdruck zum Umgebungsdruck bedeuten. Im normalen, ungeregelten Arbeitsablauf der Vorrichtung wird zunächst ein hoher Unterdruck in der Formkammer erzeugt, indem das in der Formkammer vorhandene Gas über den Absauganschluss mittels der Vakuumpumpe abgesogen wird. Dadurch entsteht ein Vakuum. Durch das Vakuum in der Formkammer und den auf das Matrixmaterial im Harzbehälter wirkenden Druck wird das Matrixmaterial durch den Zulaufanschluss aus dem Harzbehälter in die Formkammer gesogen beziehungsweise gedrückt. Das Matrixmaterial strömt dabei so lange in die Formkammer, bis sich in der Förderstrecke zwischen dem Harzbehälter und der Formkammer ein Druckausgleich zum Umgebungsdruck eingestellt hat, wobei in den Druckausgleich auch noch der Fließwiderstand des Matrixmaterials als Bestandteil des Kräftegleichgewichts eingeht. Dies gilt auch dann, wenn im Absauganschluss noch weiterhin ein Vakuum oder Unterdruck herrscht, weil das Matrixmaterial die Sperrmembran zum Gasabsaugweg nicht überwinden kann.

Wenn in der Formkammer und dem zum Harzbehälter offenen Absauganschluss ein Kräftegleichgewicht zum Umgebungsdruck erreicht ist, befindet sich bereits mehr Matrixmaterial in der Formkammer als eigentlich erforderlich wäre. Dieser Effekt hängt mit den Wiederaufstellkräften der Fasern zusammen. In einem Vakuum liegen die Fasern des Fasermaterials flach in der Formkammer. Fließt allerdings Matrixmaterial in die Formkammer ein und sinkt dadurch der Unterdruck darin, so richten sich die Fasern des Fasermaterials wieder auf. Dadurch steigt das Raumvolumen des Fasermaterials wieder an. In diesem Zustand können die Fasern dann mehr Matrixmaterial zwischen sich aufnehmen als bei flach liegenden Fasern. Wird der Zufluss von Matrixmaterial in die Formkammer nicht unterbrochen, bevor ein Kräftegleichgewicht zum Umgebungsdruck hergestellt ist, fließt also mehr Matrixmaterial in die Formkammer ein als eigentlich für die Einbettung derselben Fasermenge in ein Matrixmaterial erforderlich wäre, was zu einem überhöhten Gewicht und schlechteren mechanischen Eigenschaften des fertigen Bauteils führt. Da das Wiederaufstellen der Fasern des Fasermaterials abhängig ist vom jeweiligen Unterdruck in der Formkammer, ist der Druckwert ein geeignetes Kriterium, um den Zufluss von Matrixmaterial druckabhängig zu unterbrechen. Durch die Vorgabe eines identischen Druckwertes kann auch eine hohe Wiederholgenauigkeit und damit eine gleichbleibende Produktqualität erzielt werden.

Der Sensor kann beliebig ausgestaltet sein. Er kann als mechanischer Sensor, beispielsweise als einfache Druckfeder, als elektronischer Sensor, beispielsweise mit einem Piezokristall als Signalgeber, als hydraulischer oder als pneumatischer Sensor, beispielsweise als Kolbenzylinder, ausgebildet sein. Der Sensor muss keine absoluten Druckwerte messen, es ist auch möglich, den Sensor so auszubilden, dass er nur relative Druckwerte misst. Es ist vorteilhaft, den für das Wiederaufstellen der Fasern relevanten Druckwert anhand der Druckverhältnisse im Zulauf zur Formkammer zu ermitteln, insbesondere den aktuellen Druck im Harzbehälter oder, noch vorteilhafter, im Verlauf des Zulaufanschlusses. Ein dort ermittelter Druck ist zuverlässiger verwertbar als ein beispielsweise in der Formkammer ermittelter Druck, da dort die Druckwerte je nach Fließverhalten und Verteilung des Matrixmaterials und dem jeweiligen Unterdruck aus dem Absauganschluss stark variieren können. Im Harzbehälter können sich unerwünschte Einflüsse aus dem auf das Matrixmaterial einwirkenden Umgebungsdruck ergeben, die den jeweiligen Messwert verfälschen.

Erfindungsgemäß ist der Sensor mit einer Stelleinrichtung verbunden. Der vom Sensor gemessene aktuelle Druckwert wird an die Stelleinrichtung übertragen. Die Stelleinrichtung kann ihrerseits mechanisch, elektrisch, elektronisch, hydraulisch oder pneumatisch betrieben werden. Wenn der Sensorwert einem Wert entspricht, bei dem die Stelleinrichtung zu schließen ist, bewegt die Stelleinrichtung das Schließelement in die Schließstellung. In der Schließstellung sperrt das Schließelement den Zulaufanschluss, so dass kein weiteres Matrixmaterial mehr in die Formkammer gelangen kann. Die Schließeinrichtung kann beispielsweise als ein schließbares Ventil ausgebildet sein, bei der ein bewegliches Schließelement in der Schließstellung den Durchfluss des Matrixmaterials blockiert.

Nach einer Ausgestaltung der Erfindung aktiviert das Auslösesignal die Stelleinrichtung zum Schließen des Schließelements bei einem aktuellen Differenzdruck zwischen dem aktuellen Druck an der Messstelle und dem Umgebungsdruck, der zwischen 120 mbar und 200 mbar, bevorzugt zwischen 130 und 170 mbar beträgt. Wenn der Sensor bei diesen Druckwerten ein Auslösesignal erzeugt und das Schließelement von der Stelleinrichtung in die Schließstellung bewegt wird, wird der Zufluss von Matrixmaterial zu einem Zeitpunkt gestoppt, zu dem sich bereits ein ausreichender Faservolumengehalt in herzustellenden Faserverbundbauteil eingestellt hat und ein weiterer Zufluss von Matrixmaterial keine technischen Vorteile mehr bietet. Der genaue Zielwert ist insbesondere auch von der verwendeten Faserart und dem jeweiligen Bauteil und den an das Bauteil gestellten technischen Anforderungen abhängig.

Nach einer Ausgestaltung der Erfindung ist der Wert, bei dem das Auslösesignal die Stelleinrichtung zum Schließen des Schließelements aktiviert, verstellbar ausgebildet. Durch die Verstellbarkeit des Wertes für das Auslösesignal kann die Vorrichtung an unterschiedliche Bauteile und Faserarten angepasst werden. Die dafür erforderliche Verstelltechnik kann abhängig von der verwendeten Antriebstechnik der Stelleinrichtung gewählt werden. Für eine mechanische Antriebstechnik bietet sich beispielsweise eine mechanische Verstelltechnik an, für eine elektrische Antriebstechnik eine elektrische oder elektronische Verstelltechnik. Es ist aber auch möglich, für eine mechanische Antriebstechnik beispielsweise eine elektronische Verstelltechnik zu verwenden oder sonstige technisch mögliche Kombinationen einzusetzen.

Nach einer Ausgestaltung der Erfindung sind die Funktionen des Sensors, des Schließelements und der Stelleinrichtung von einem federkraftbetätigten Kugelsitzventil ausgefüllt, das in den Zulaufanschluss und/oder den Harzbehälter eingebaut ist. Das Kugelsitzventil verfügt als mechanisches Bauteil über eine hohe Betriebssicherheit, Wartungsarmut, hohe Wiederholgenauigkeit und es verursacht nur niedrige Kosten. Das in den Zulaufanschluss eingebaute Kugelsitzventil lässt bei einer Druckdifferenz zwischen dem Umgebungsdruck und dem Unterdruck im Zulaufanschluss, die größer ist als die Federkraft der Ventilfeder, das Matrixmaterial vom Harzbehälter in die Formkammer strömen, während es mit der Kugel durch die Federkraft das Ventil schließt, sobald die Druckdifferenz der Federkraft entspricht. Über die Federkraft der Ventilfeder kann somit die Auslöseschwelle des Kugelsitzventils genau eingestellt werden.

Es wird ausdrücklich darauf hingewiesen, dass die vorstehend beschriebenen Ausgestaltungen der Erfindung jeweils für sich, aber auch in einer beliebigen Kombination miteinander kombinierbar sind, soweit dem keine technischen Zwänge entgegen stehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:

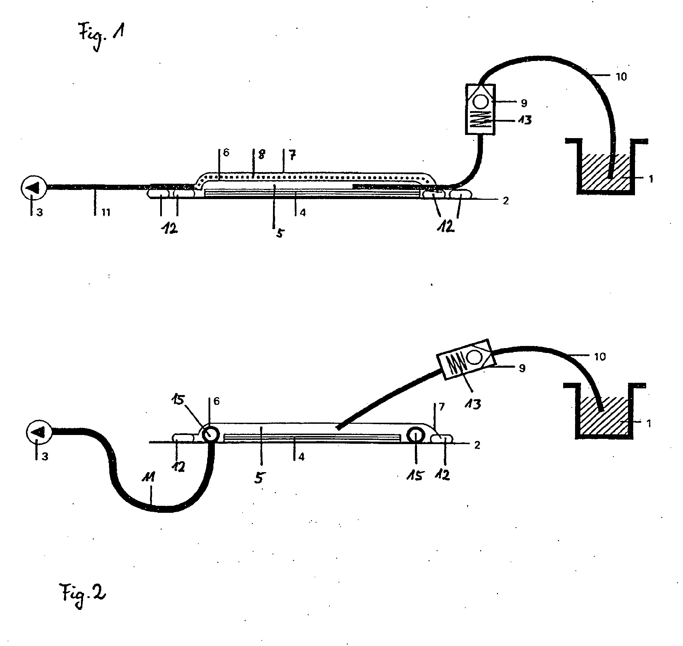

- Fig. 1:: eine erfindungsgemäße Vorrichtung, bei der unter der Abdeckfolie zwei Kammern ausgebildet sind, nämlich die Formkammer und die davon durch ein Membranelement getrennte Gasabsaugkammer, und bei der der Zulaufanschluss durch ein mit einer Stelleinrichtung schließbares Schließelement absperrbar ist, und
- Fig. 2:: eine erfindungsgemäße Vorrichtung, bei der unter der Abdeckfolie nur die Formkammer ausgebildet ist und in die Formkammer ein mit einer Membranfolie umhüllter Absaugschlauch eingelegt ist, bei der der Zulaufanschluss durch ein mit einer Stelleinrichtung schließbares Schließelement absperrbar ist.

In Fig. 1 ist eine erfindungsgemäße Vorrichtung gezeigt, bei der ein Matrixmaterial aus einem Harzbehälter 1 in ein Formwerkzeug 2 gelangt. Das Matrixmaterial wird mittels einer Vakuumpumpe 3 aus dem Harzbehälter 1 in die Formkammer 15 gesaugt, in die zuvor ein Fasermaterial 4 eingelegt worden ist, das dann mit dem aus dem Harzbehälter 1 gepumpten Matrixmaterial 5 durchtränkt wird. In der zeichnerischen Darstellung in Fig. 1 sind das Fasermaterial 4 und das Matrixmaterial 5 zeichnerisch vereinfachend als zwei geschichtete Materialien dargestellt, tatsächlich dringt das Matrixmaterial 5 allerdings in das Fasermaterial 4 ein, so dass daraus im Formwerkzeug 2 ein Faserverbundbauteil entsteht.

Nach außen hin ist die Formkammer durch eine luftdichte Abdeckfolie 7 gegen ein von außen eindringendes Gas, insbesondere auch Luft, abgedichtet. An den Rändern des Formwerkzeugs 2 ist die Abdeckfolie 7 im Ausführungsbeispiel zusätzlich über ein oder mehrere Dichtbänder 12 abgedichtet.

Um in der Formkammer befindliches Gas absaugen zu können, befindet sich zwischen der Formkammer und der Abdeckfolie 7 ein Membranelement 6, das gasdurchlässig ist, jedoch das Matrixmaterial 5 nicht hindurch treten lässt. Damit die von der Formkammer abgewandte Oberfläche des Membranelements 6 sich nicht an die der Formkammer zugewandte Innenfläche der Abdeckfolie 7 anlegt und auf diese Weise den Gasabsaugweg versperrt, ist zwischen das Membranelement 6 und die Abdeckfolie 7 ein Vlies 8 gelegt, durch das das aus der Formkammer durch das Membranelement 6 abgesaugte Gas in den Absauganschluss 11 strömen kann. Das Membranelement 6 und die Abdeckfolie 7 bilden zusammen mit dem Vlies 8 eine sich flächig über die Formkammer erstreckende Gasabsaugkammer 14 aus.

Durch die Sperrwirkung des Membranelements 6 gegenüber dem Matrixmaterial 5 und die flächige Abdeckung der Formkammer durch das Membranelement 6 ist es möglich, aus der Formkammer sämtliches Gas abzusaugen und im Absaugbereich ein Vakuum auszubilden, durch das das aus dem Harzbehälter 1 in die Formkammer einströmende Matrixmaterial 5 praktisch blasenfrei im gesamten Raum der Formkammer verteilt wird.

Durch das von der Vakuumpumpe 3 erzeugte Vakuum wird aus dem Harzbehälter 1 durch den Zulaufanschluss 10 die maximale Menge an Matrixmaterial 5 in die Formkammer eingesogen, die die Formkammer aufzunehmen vermag. Dabei kann mehr Matrixmaterial 5 in die Formkammer gelangen, als dies zur vollständigen Benetzung des Fasermaterials 4 in der Formkammer erforderlich ist.

Um den Zulauf des Matrixmaterials 5 zu begrenzen, ist in dem in Fig. 1 dargestellten Ausführungsbeispiel in dem Zulaufanschluss 10 ein Schließelement 9 angeordnet. Im Ausführungsbeispiel ist das Schließelement 9 die Kugel eines Kugelsitzventiles, in dem die Kugel 9 von einer Feder als Stelleinrichtung 13 mit der von der Feder erzeugten Federkraft gegen die Fliessrichtung des Matrixmaterials 5 gedrückt gehalten ist. Dabei wird das Schließelement 9 in eine Offenstellung gezogen, wenn das von der Vakuumpumpe 3 erzeugte Vakuum stärker ist als die von der Feder der Stelleinrichtung 13 erzeugte Federkraft. Stellt sich unter Berücksichtigung des Fließwiderstands ein Kräftegleichgewicht zwischen dem von der Vakuumpumpe 3 erzeugten Vakuum und der von der Feder erzeugten Federkraft ein, so bewegt die Feder als Stelleinrichtung 13 die Kugel als Schließelement 9 in ihren Kugelsitz, wodurch dann der Durchlauf durch das Kugelsitzventil für das Matrixmaterial 5 geschlossen ist.

Abweichend vom Ausführungsbeispiel ist es auch möglich, das Schließelement 9 nicht entlang des Zulaufanschlusses 10 anzuordnen, sondern den Harzbehälter 1 gegen die Umgebungsluft abzudichten, so dass bei aktivierter Vakuumpumpe 3 auch im Harzbehälter 1 ein Vakuum entsteht. Der Zufluss von Matrixmaterial 5 in die Formkammer kann dann reguliert werden, indem der Harzbehälter 1 mit einem Gasventil verbunden ist, das den Zustrom von Gas in den Harzbehälter 1 ermöglicht, jedoch der im Harzbehälter herrschende aktuelle Druck von einem Sensor gemessen und das Gaselement mit einem Schließelement versehen ist, in dem eine Steileinrichtung bei einem Auslösesignal des Sensors der Zustrom von Gas in den Harzbehälter 1 absperrbar ist.

Im Ausführungsbeispiel ist die Feder als Stelleinrichtung 13 gleichzeitig der Sensor, mit dem der im Zulaufanschluss 10 bzw. dem Harzbehälter 1 herrschende aktuelle Druck messbar ist. Anstelle einer Feder als Sensor können aber auch andere Sensortypen verwendet werden, mit denen der im Zulaufanschluss 10 oder dem Harzbehälter 1 herrschende aktuelle Druck messbar ist. Die Feder als Stelleinrichtung 13 stellt eine kostengünstige mechanische Ausführung eines Antriebs einer Stelleinrichtung 13 dar, anstelle einer mechanischen Feder können aber auch Antriebe wie Elektromagnete, Elektromotoren, pneumatische oder hydraulische Motoren oder dergleichen verwendet werden.

Die im Ausführungsbeispiel verwendete Feder verfügt über eine Federkennlinie, aus der sich die aus einem Verformungsweg ergebende Kraft ablesen lässt. Bei einer leicht angespannten Montage der Feder im Kugelsitzventil, bei der die Feder bereits einen Teil ihres Federweges von der Kugel eingedrückt ist, übt die Feder auf die Kugel bereits eine der spezifischen Federkennlinie dieser Feder entsprechende Kraft auf die Kugel aus, mit der die Kugel im Kugelsitz in einer geschlossenen Stellung gehalten ist. Diese in der Schließstellung von der Feder auf die Kugel ausgeübte Kraft ist der Schwellwert, ab dem der Zulaufanschluss 10 für den Durchfluss von Matrixmaterial 5 abgesperrt ist. Unterschreitet das von der Vakuumpumpe 3 erzeugte Vakuum und die dadurch auf das Matrixmaterial 5 ausgeübte Saugkraft diese Schließkraft der Feder, so entspricht dies dem Auslösesignal der Feder, die Kugel mit der Federkraft in die Schließstellung zu bewegen und dadurch den Zulaufanschluss 10 zu sperren.

In Fig. 2 ist eine alternative Ausgestaltung der erfindungsgemäßen Vorrichtung gezeigt, bei der unter der Abdeckfolie 7 nur die Formkammer ausgebildet ist und in die Formkammer ein mit der Membranfolie 6 umhüllter Absaugschlauch 15 eingelegt ist. Durch die Umhüllung des Absaugschlauches 15 mit dem Membranelement 6 kann das Matrixmaterial 5 nicht in den Absaugschlauch 15 eindringen. Da der Absaugschlauch 15 mit dem Absauganschluss 11 verbunden ist, kann das in der Formkammer befindliche Gas jedoch durch das Membranelement 6 hindurch und durch den Absaugschlauch 15 zur Vakuumpumpe 3 hin abgesaugt werden. Je nachdem, wie der Absaugschlauch 15 innerhalb der Formkammer verlegt ist, ist es auch mit dem Absaugschlauch 15 möglich, die Formkammer vollständig vom Gas zu evakuieren und dadurch das Matrixmaterial 5 blasenfrei in die Formkammer einzusaugen.

Je nachdem, auf welchen Schwellwert die Federkraft der Feder eingestellt ist, mit der die Kugel in ihrer Schließstellung im Kugelsitz gehalten ist, wird der Zufluss des Matrixmaterials 5 in die Formkammer früher oder später gestoppt. Der Schwellwert als Auslösesignal für ein Schließen des Zulaufanschlusses 10 oder des Harzbehälters 1 sollte so gewählt werden, dass sich in der Formkammer jedenfalls eine vollständige Benetzung und ausreichende Tränkung des Fasermaterials 4 mit dem Matrixmaterial 5 ergibt.

Die Erfindung ist nicht auf die beiden vorstehend erläuterten Ausführungsbeispiele beschränkt. Dem Fachmann bereitet es keine Schwierigkeiten, die Erfindung auf eine ihm als geeignet erscheinende Weise abzuwandeln, um sie an einen konkreten Anwendungsfall anzupassen.

## Patentansprüche

1. Vorrichtung zur Herstellung von Bauteilen aus Faserverbundwerkstoffen mit einem Formwerkzeug (2), das eine luftdicht verschließbare Formkammer zur Aufnahme und Bildung eines Verbunds aus einem Fasermaterial (4) und einem Matrixmaterial (5) aufweist und in das ein Membranelement (6) zur Trennung des Faserund Matrixmaterials (4, 5) von einem Gasabsaugweg einlegbar ist, einem mit dem Formwerkzeug (2) über den mit dem Gasabsaugweg verbundenen Absauganschluss (11) zur Absaugung von einem in der Formkammer befindlichen Gas und einem Zulaufanschluss (10) für ein aus einem Harzbehälter (1) in die Formkammer einlaufendes Matrixmaterial (5), **dadurch gekennzeichnet, dass** an den Zulaufanschluss (10) und/oder den Harzbehälter (1) ein Sensor angeschlossen ist, mit dem der im Zulaufanschluss (10) oder dem Harzbehälter (1) herrschende aktuelle Druck messbar ist, der Sensor mit einer einem Schließelement (9) zugeordneten Stelleinrichtung (13) verbunden ist, das Schließelement (9) bei einem Auslösesignal des Sensors von der Stelleinrichtung (13) aus einer Offenstellung in eine Schließstellung beweglich ist und das Schließelement (9) den Zulaufanschluss (10) und/oder den Harzbehälter (1) sperrt.

2. Vorrichtung nach Anspruch 1, **dadurch gekennzeichnet, dass** das Auslösesignal die Stelleinrichtung (13) zum Schließen des Schließelements (9) bei einem aktuellen Differenzdruck zwischen dem aktuellen Druck an der Messstelle und dem Umgebungsdruck aktiviert, der zwischen 120 mbar und 200 mbar, bevorzugt zwischen 130 und 170 mbar beträgt.

3. Vorrichtung nach Anspruch 1 oder 2, **dadurch gekennzeichnet, dass** der Wert, bei dem das Auslösesignal die Stelleinrichtung (13) zum Schließen des Schließelements (9) aktiviert, verstellbar ausgebildet ist.

4. Vorrichtung nach einem der vorhergehenden Ansprüche, **dadurch gekennzeichnet, dass** die Funktionen des Sensors, des Schließelements (9) und der Stelleinrichtung (13) von einem federkraftbetätigten Kugelsitzventil ausgefüllt sind, das in den Zulaufanschluss (10) und/oder den Harzbehälter (1) eingebaut ist.

## Claims

1. Device for producing components from fibre-reinforced composites, the device comprising a mould (2), which comprises a mould chamber, which is closable in an airtight manner, for receiving and forming a composite from a fibre material (4) and a matrix material (5), and in which mould a membrane element (6) can be placed for separating the fibre material (4) and the matrix material (5) from a gas suction passage, and comprising a suction connector (11), connected to the mould (2) via the gas suction passage, for removing by suction a gas located in the mould chamber, and comprising an inlet connector (10) for a matrix material (5) flowing from a resin container (1) into the mould chamber, **characterised in that** a sensor is connected to the inlet connector (10) and/or the resin container (1), with which sensor the actual pressure prevailing in the inlet connector (10) or the resin container (1) can be measured, the sensor is connected to an actuator (13) associated with a closure element (9), the closure element (9) is movable by the actuator (13) from an open position into a closed position in the event of a trigger signal from the sensor, and the closure element (9) closes the inlet connector (10) and/or the resin container (1).

2. Device according to claim 1, **characterised in that** the trigger signal activates the actuator (13) for closing the closure element (9) when an actual differential pressure between the actual pressure at the measuring location and the ambient pressure is between 120 mbar and 200 mbar, preferably between 130 and 170 mbar.

3. Device according to either claim 1 or claim 2, **characterised in that** the value at which the trigger signal activates the actuator (13) for closing the closure device (9) is adjustable.

4. Device according to any of the preceding claims, **characterised in that** the functions of the sensor, the closure element (9), and the actuator (13) are fulfilled by a spring-force-actuated ball seat valve which is incorporated into the inlet connector (10) and/or the resin container (1).

## Revendications

1. Dispositif de fabrication de composants à partir de matériaux en fibres composites, comprenant un outil de forme (2) qui présente une chambre de moule obturable de manière étanche à l'air pour recevoir et former un composite d'un matériau de fibre (4) et d'un matériau de matrice (5) et dans lequel peut être intercalé un élément de membrane (6) destiné à séparer le matériau de fibre et le matériau de matrice (4, 5) par un moyen d'aspiration de gaz, un raccordement d'aspiration (11) relié à l'outil de forme (2) par l'intermédiaire du moyen d'aspiration de gaz pour aspirer un gaz se trouvant dans la chambre de moule et un raccordement d'alimentation (10) pour un matériau de matrice provenant d'un réservoir de résine (1) et entrant dans la chambre de moule, **caractérisé en ce qu'**un capteur est raccordé au raccordement d'alimentation (10) et/ou au réservoir de résine (1) et permet de mesurer la pression actuelle régnant dans le raccordement de d'alimentation (10) ou le réservoir de résine (1), le capteur étant relié à un mécanisme de réglage (13) associé à un élément de fermeture (9), lequel l'élément de fermeture (9) étant mobile d'une position ouverte dans une position fermée suite à un signal de déclenchement du capteur par le mécanisme de réglage (13) et l'élément de fermeture (9) bloquant le raccordement d'alimentation (10) et/ou le réservoir de résine (1).

2. Dispositif selon la revendication 1, **caractérisé en ce que** le signal de déclenchement active le mécanisme de réglage (13) pour fermer l'élément de fermeture (9) suite à une pression différentielle actuelle entre la pression actuelle sur le point de mesure et la pression ambiante qui est comprise entre 120 mbar et 200 mbar, de préférence entre 130 et 170 mbar.

3. Dispositif selon la revendication 1 ou 2, **caractérisé en ce que** la valeur selon laquelle le signal de déclenchement active le mécanisme de réglage (13) pour fermer l'élément de fermeture (9) est configurée réglable.

4. Dispositif selon une des revendications précédentes, **caractérisé en ce que** les fonctions du capteur, de l'élément de fermeture (9) et du mécanisme de réglage (13) sont remplies par un clapet à bille actionné par un ressort qui est monté dans le raccordement d'alimentation (10) et/ou le réservoir de résine (1).
